# EUROPEAN PATENT SPECIFICATION

(11) **EP 3 519 631 B1**
(45) Date of publication and mention of the grant of the patent: **05.05.2021**
(21) Application number: 17849825.9
(22) Date of filing: 16.03.2017
(51) Int. Cl.: E01C 11/22

(54) **PROCESS OF FLASH FLOODS DRAINAGE FROM GRAVEL ROADS**
VERFAHREN ZUR DRAINAGE VON STURZFLUTEN VON SCHOTTERSTRASSEN
PROCÉDÉ DE DRAINAGE DE CRUES SUBITES DE ROUTES DE GRAVIER

(30) Priority: 29.09.2016 BA 163147
(43) Date of publication of application: 07.08.2019
(73) Proprietor: PETROVIC, Pero, 78000 Banja Luka (BA)
(72) Inventor: PETROVIC, Pero, 78000 Banja Luka (BA)
(74) Representative: Garavelli, Paolo
(86) International application number: PCT/BA2017/000001
(87) International publication number: WO 2018/058203

(56) References cited:
- FR-A- 560 100
- US-A- 1 420 535
- US-A- 2 051 228
- US-A1- 2004 126 186
- US-A1- 2005 100 409
- US-B1- 6 254 307

## Description

### 1) TECHNICAL FIELD TO WHICH THE INVENTION APPLIES

This invention (process) refers to the area of construction engineering, construction of roads, especially those gravel roads which have longitudinal slope.

### TECHNICAL PROBLEM

Due to the climate change, rainfall intensity (downpour) in the last decade has increased (rain, l/s, m2), leading to flash floods of gravel roads where water flows in longitudinal instead of the designed transverse direction. As a result, there is an intensive inflow of torrential water on the road with longitudinal slope that takes away the pavement surfacing (wearing course - unbound layer) of gravel road, which accelerates the destruction of the pavement and reduces the lifecycle well below the designed period. This results in the need for more frequent road rehabilitation and increased maintenance costs for such roads. In addition, it leads to removal of the material from the road so this creates an additional problem.

### 2) STATE OF THE ART

Drainage of surface water from the surface of the gravel road caused by insufficient permeability of pavement is done by constructing them the cross slope of 4% to the channel (gutter) for rainwater drainage whose bottom should be 20 cm below the edge of the road. Where conditions allow, a gutter (an area near the road intended for surface water drainage) can also be formed. However, during the exploitation of roads, uneven load of the entire surface of the road leads to distortion of slope and the appearance of sagging (rut) at parts mostly affected by moving wheels. This distorts derived slope and changes the direction of runoff from the desired (cross) to the unwanted (longitudinal) direction in the direction of movement of the vehicle. These roads do not have high traffic, and generally are designed so that the vehicle is in motion in any direction moving the same path, except when passing another vehicle. Even the size of allowed rut in the pavement surfacing from unbound material is 2.5 to 5 cm. This and the occurrence of intense rains, which are more and more frequent, leads to significant speed of water flow which then has enough energy to carry the unbound aggregate from the pavement surfacing and cause its destruction. In terms of determining annual loss of aggregate, data on annual precipitation is used, which makes the usability of sizes calculated in this way rather questionable. US 2,051,228 A discloses a process of drainage according to the preamble of claim 1.

### 3) SUMMARY OF THE INVENTION

The primary objective of the invention is to improve the discharge of flash flood water so that a road will be designed with a different permeability of the pavement. The road with the slope would be divided into segments with length less than 40m. On each of them there would be a strip with significantly higher water permeability installed than the rest of the pavement. The strip would consist of concrete buried channel (with trapezoidal cross-section), which would be filled with crushed stone. The width of the permeable strip (for drainage) would in fact be a smaller side of the trapezoid channel, and its longer side would be a channel seated on one of the layers of pavement construction or even on a road natural subgrade. This channel should be constructed at the level of the road or 1-2 cm lower. There would be no bumps on the road. The channel could be filled with the larger fraction of stone at its ends. With the arrival of water that flows in the longitudinal direction of the permeable strip it would descend and fill the trench (part of the space between the filling). The increasing inflow of rainwater into the channel would affect the level of water, and thus the available pressure (static pressure) for its flow into the drainage channel (trench). With the increasing inflow of rainwater the speed of water would be increased and thus its discharge from the channel.

In extreme conditions, when all the water could not sink into the channel, the part that would continue to flow away on the road, would have a much lower speed (and thus energy) during the discharge from the strip than during inflow, so the downstream damage that water could make would be considerably smaller than if the strip were not there.

### 4) BRIEF DESCRIPTION OF DRAWINGS

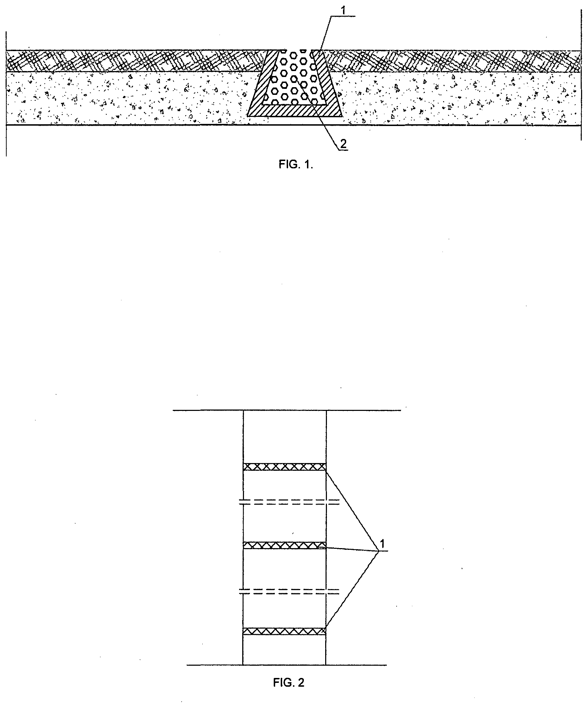

Figure 1 shows the longitudinal section of pavement construction with its different layers and the position of channel filled with crushed stone that is used for intake and drainage of surface water from the gravel road pavement. Figure 2 shows the view on the pavement, which has longitudinal slope and permeable strips comprised of channels.

### 5) DETAILED DESCRIPTION OF AT LEAST ONE OF THE WAYS OF REALIZATION OF THE INVENTION

New gravel road pavement with longitudinal slope would be designed as it is now. The road with slopes would then be divided into segments, starting from the top of the slope so that the built-in channels can accept flash floods that flow along the length of the road. Installation of channels and their filling with crushed stone would be the last operation of the road construction. Excavation of channels in the already constructed layers of pavement construction could be carried out mechanically or manually. Compacting layers along the channel would be performed with a frog rammer.

For already constructed roads with longitudinal slope the procedure would be analogous to the previously described.

## Claims

1. Process of drainage of torrential surface water from a gravel road having a pavement structure with an unbound surface layer and a longitudinal slope, said process comprising the steps of:
- dividing the gravel road into longitudinally sloped segments;
- installing trapezoidal channels (1) transverse to the slope into the pavement structure in each gravel road segment;
**characterized in that**
the channels (1) are filled with crushed stone (2) being more permeable compared to the unbound surface layer to make the torrential water flow sink down and be discharged from the pavement structure.

2. Process according to claim 1, wherein the channels (1) are made of concrete.

3. Process according to claim 1 or 2, wherein the segments are less than 40m long.

4. Process according to any one of the previous claims, wherein the channels (1) are constructed at a same level with the gravel road or 1-2 cm lower than the gravel road level.

## Patentansprüche

1. Verfahren zur Entwässerung von reißendem Oberflächenwasser von einer Schotterstraße mit einer Fahrbahnstruktur mit einer ungebundenen Oberflächenschicht und einer Längsneigung, wobei das Verfahren die folgenden Schritte umfasst:
- Aufteilung der Schotterstraße in längs geneigte Abschnitte;
- Einbau von Trapezkanälen (1) quer zum Hang in die Fahrbahnstruktur in jedem Schotterstraßensegment;
**dadurch gekennzeichnet**
Die Kanäle sind mit Schotter (2) gefüllt, der im Vergleich zur ungebundenen Oberflächenschicht durchlässiger ist, damit der strömende Wasserfluss nach unten sinkt und aus der Fahrbahnstruktur abgeleitet wird.

2. Verfahren nach Anspruch 1, wobei die Kanäle (1) aus Beton bestehen.

3. Verfahren nach Anspruch 1 oder 2, wobei die Segmente weniger als 40 m lang sind.

4. Verfahren nach einem der vorhergehenden Ansprüche, wobei die Kanäle (1) auf derselben Höhe wie die Schotterstraße oder 1-2 cm niedriger als die Schotterstraßenebene aufgebaut sind.

## Revendications

1. Processus de drainage des eaux de surface torrentielles d'une route de gravier ayant une structure de chaussée avec une couche de surface non liée et une pente longitudinale, ledit processus comprenant les étapes de:
- diviser la route de gravier en segments inclinés longitudinalement;
- installer des canaux trapézoïdaux (1) transversaux à la pente dans la structure de la chaussée dans chaque segment de route en gravier;
**caractérisé en ce que**
les canaux sont remplis de pierre concassée (2) étant plus perméable par rapport à la couche de surface non liée pour faire couler de l'eau torrentielle vers le bas et être évacuée de la structure de la chaussée.

2. Procédé selon la revendication 1, dans lequel les canaux (1) sont en béton.

3. Procédé selon la revendication 1 ou 2, dans lequel les segments ont une longueur inférieure à 40 m.

4. Procédé selon l'une quelconque des revendications précédentes, dans lequel les canaux (1) sont construits au même niveau que la route de gravier ou 1-2 cm plus bas que le niveau de la route de gravier.
